# FASCICULE DE BREVET EUROPEEN

(11) **EP 3 174 758 B1**
(45) Date de publication et mention de la délivrance du brevet: **19.06.2019**
(21) Numéro de dépôt: 15742260.1
(22) Date de dépôt: 27.07.2015
(51) Int. Cl.: F21S 43/239, F21S 43/241, F21S 43/243, F21S 43/249, B60Q 1/26, B60Q 3/00, F21V 8/00

(54) **MODULE LUMINEUX D'ECLAIRAGE ET/OU DE SIGNALISATION POUR VEHICULE AUTOMOBILE**
LICHTMODUL ZUR BELEUCHTUNG UND/ODER SIGNALISIERUNG FÜR EIN KRAFTFAHRZEUG
LIGHTING AND/OR SIGNALLING LIGHT MODULE FOR A MOTOR VEHICLE

(30) Priorité: 31.07.2014 FR 1457418
(43) Date de publication de la demande: 07.06.2017
(73) Titulaire: Valeo Vision, 93012 Bobigny Cedex (FR)
(72) Inventeur: GODBILLON, Vincent, F-75011 Paris (FR); PUENTE, Jean-Claude, F-93190 Livry Gargan (FR)
(86) Numéro de dépôt international: PCT/EP2015/067126
(87) Numéro de publication internationale: WO 2016/016175

(56) Documents cités:
- EP-A1- 2 857 740
- WO-A1-2010/044030
- US-A1- 2005 002 110
- US-A1- 2006 209 417
- US-A1- 2009 219 734
- US-A1- 2012 275 173

## Description

L'invention concerne le domaine des modules lumineux, notamment d'éclairage et/ou de signalisation pour véhicule automobile.

L'invention concerne plus particulièrement un module lumineux, notamment d'éclairage et/ou de signalisation pour véhicule automobile comprenant :
- un guide de lumière comprenant au moins des première et deuxième zones d'entrée et au moins des première et deuxième zones de sortie de lumière,
- une première source de lumière agencée en regard de la première zone de l'entrée,
- une deuxième source de lumière agencée en regard de la deuxième zone de l'entrée,
le guide étant agencé de sorte à ce que la lumière issue des première et deuxième sources soit apte à se propager dans le guide jusqu'à des première et deuxième zones de la sortie, respectivement.

Des modules lumineux conformes à la définition générique qu'en donne le préambule ci-dessus sont connus pour lesquels les première et deuxième zones de la sortie de lumière sont adjacentes comme dans le document US2012/0275173 ou totalement confondues comme dans les documents US2006/0209417, US2005/0002110, WO2010/044030 ou EP2857740. En considérant qu'une seule des deux sources peut émettre ou que les deux sources peuvent émettre en même temps, seuls trois effets de lumière peuvent être obtenus :
- la lumière issue de la première source est émise en sortie du guide par les première et deuxième zones de la sortie de lumière,
- la lumière issue de la deuxième source est émise en sortie du guide par les première et deuxième zones de la sortie de lumière, et
- un mélange de lumière issue des première et deuxième sources est émise en sortie du guide par les première et deuxième zones de la sortie de lumière.

Dans ce contexte, la présente invention propose un module lumineux, notamment d'éclairage et/ou de signalisation pour véhicule automobile permettant l'obtention d'effets de lumière originaux.

A cette fin, le module lumineux de l'invention, par ailleurs conforme à la définition générique qu'en donne le préambule ci-dessus, est essentiellement tel qu'il comprend un premier dispositif de contrôle de la propagation de la lumière dans le guide, le premier dispositif de contrôle étant agencé de sorte que la deuxième zone de sortie recouvre partiellement la première zone de sortie.

Le module lumineux permet ainsi d'obtenir de nouveaux effets de lumière.

Il est à noter que les première et deuxième zones d'entrée peuvent être disposées sur une même entrée du guide. En variante, chaque entrée peut être disposée sur une branche d'entrée distincte du guide.

Il est également à noter que les sources de lumière peuvent être aptes à émettre de la lumière selon une même direction générale d'émission.

Le premier dispositif de contrôle comprend des moyens de confinement pour confiner la propagation de la lumière issue de la deuxième source et pour laisser libre la propagation de la lumière issue de la première source.

Avantageusement, le guide de lumière peut s'étendre longitudinalement, c'est-à-dire dans le sens de la propagation de la lumière émise par les sources de lumière, selon une direction principale. Dans ce cas, les moyens de confinement peuvent être orientés dans une direction faisant un angle avec cette direction principale.

Selon un mode de réalisation particulier, les première et deuxième zones de sortie ont en commun une partie de leur pourtour.

Selon une première particularité des moyens de confinement, ces derniers comprennent au moins une cavité pratiquée dans le guide et disposée de sorte à réfléchir totalement la lumière issue de la deuxième source et se propageant jusqu'à atteindre la cavité.

Selon une deuxième particularité des moyens de confinement, ces derniers comprennent au moins un insert opaque ou réfléchissant, inclus dans le guide, et apte à absorber et/ou réfléchir totalement la lumière issue de la deuxième source et se propageant jusqu'à atteindre l'insert, respectivement.

Selon une troisième particularité des moyens de confinement, ces derniers comprennent une pluralité desdites cavités et/ou desdits inserts disposé(e)s en persienne sensiblement sur un plan médian séparant les première et deuxième zones d'entrée.

Selon une particularité du premier dispositif de contrôle, ce dernier comprend une entaille pratiquée dans le guide et séparant les première et deuxième zones d'entrée.

Selon une particularité du guide, ce dernier comprend:
- une première branche définie entre la première zone d'entrée et la partie de la première zone de sortie non recouverte par la deuxième zone de sortie, et
- une deuxième branche définie entre la deuxième zone d'entrée et la deuxième zone de sortie,
les deux branches étant jointes entre elles par une surface de jonction moins étendue que la surface de la deuxième branche comprenant la surface de jonction.

Dans ce cas, le premier dispositif de contrôle de la propagation de la lumière dans le guide peut être agencé au niveau de la surface de jonction des deux branches.

Avantageusement, les moyens de confinement s'étendent transversalement sur toute la largeur de la première branche.

Le guide selon cette particularité peut comprendre un deuxième dispositif de contrôle de la propagation de la lumière. Ce deuxième dispositif de contrôle comprend des moyens de confinement agencés dans la deuxième branche sensiblement sous un bord long de la surface de jonction pour confiner la propagation de la lumière issue de la première source de sorte que les première et deuxième zones de sortie se recouvrent sur une zone délimitée de la deuxième zone de sortie.

Le guide selon cette particularité peut en outre être tel que la surface de la deuxième branche comprenant la surface de jonction entre les deux branches soit repliée sur elle-même de sorte que la deuxième branche forme sensiblement un anneau.

Selon une particularité du module lumineux selon l'invention, les première et deuxième sources ont des fonctions d'éclairage et/ou de signalisation différentes entre elles.

Par exemple, la première source permet d'assurer une fonction d'indicateur de direction (ou de feux clignotants) et la deuxième source permet d'assurer une fonction de feux de circulation diurnes. La première source émet alors une lumière de couleur ambrée ou jaune et la deuxième source émet une lumière blanche. Avantageusement, la deuxième source peut être en outre associée à une fonction de feu de position, la puissance lumineuse émise par cette source pour réaliser cette fonction pouvant être réduite par rapport à la puissance nécessaire à la réalisation de la fonction de feux de circulation diurnes. Les première et deuxième sources peuvent encore être disposées sur un même support.

D'autres caractéristiques et avantages de l'invention ressortiront clairement de la description qui en est faite ci-après, à titre indicatif et nullement limitatif, en référence aux dessins annexés, dans lesquels :
- la figure 1 représente une vue en perspective et en transparence d'un module lumineux selon l'invention comprenant un guide de lumière selon un premier mode de réalisation,
- la figure 2 représente une vue de face de la sortie du guide de lumière selon la figure 1,
- la figure 3A représente une vue en perspective et en transparence d'un guide de lumière selon un deuxième mode de réalisation,
- la figure 3B représente une vue en coupe et en transparence d'un guide de lumière selon une variante de son deuxième mode de réalisation,
- la figure 4 représente une vue en coupe et en transparence d'un guide de lumière selon un troisième mode de réalisation,
- la figure 5 représente une vue en perspective et en transparence d'un guide de lumière selon un quatrième mode de réalisation,
- la figure 6 représente une vue en perspective et en transparence d'un guide de lumière selon un cinquième mode de réalisation,
- la figure 7 représente une vue en perspective et en transparence d'un guide de lumière selon une variante de son cinquième mode de réalisation,
- la figure 8 représente une vue de face de la sortie du guide de lumière selon la figure 7, et
- la figure 9 représente une vue de face d'un guide de lumière selon un sixième mode de réalisation.

Dans son acceptation la plus large, le module lumineux 1, notamment d'éclairage et/ou de signalisation pour véhicule automobile, selon l'invention comprend :
- un guide 10 de lumière,
- une première source 11 de lumière,
- une deuxième source 12 de lumière, et
- un premier dispositif de contrôle 13 de la propagation de la lumière dans le guide 10.

Le guide 10 de lumière peut être défini comme un guide d'ondes permettant le guidage d'un signal optique. Il peut être composé d'un matériau diélectrique, tel que le polycarbonate ou le polyméthacrylate de méthyle (souvent abrégé en PMMA, de l'anglais Polymethyl Methacrylate).

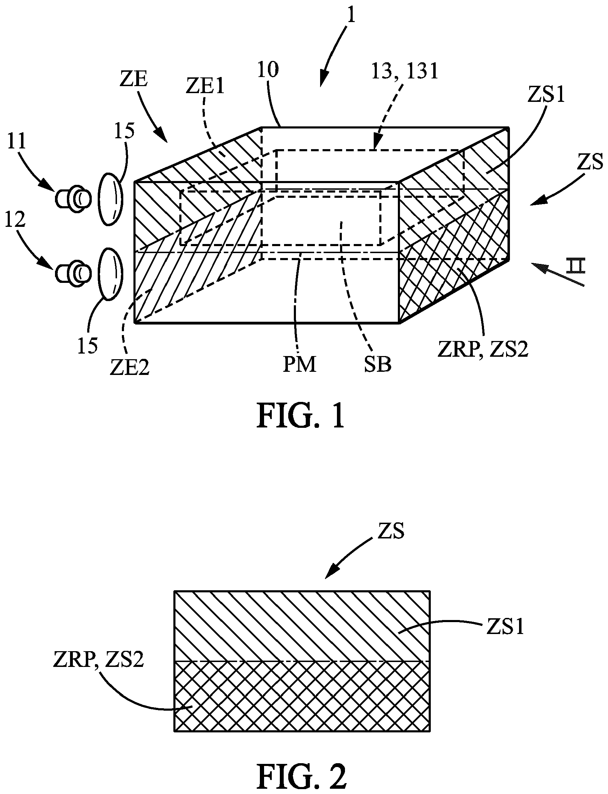

Comme représenté notamment sur la figure 1, le guide 10 de lumière comprend une entrée ZE et une sortie ZS de lumière. La première source 11 de lumière est agencée en regard d'une première zone ZE1 de l'entrée ZE et la deuxième source 12 de lumière est agencée en regard d'une deuxième zone ZE2 de l'entrée ZE. Le guide de lumière peut s'étendre longitudinalement, c'est-à-dire dans le sens de la propagation de la lumière émise par les sources de lumière, selon une direction principale. Dans ce cas, et comme nous le verrons ci-après, les moyens de confinement peuvent être orientés dans une direction faisant un angle avec cette direction principale.

La lumière issue des première et deuxième sources 11, 12 est apte à se propager dans le guide 10. La lumière issue de la première source se propage dans le guide jusqu'à en sortir par une première zone ZS1 de la sortie ZS du guide ; la lumière issue de la deuxième source se propage dans le guide jusqu'à en sortir par une deuxième zone ZS2 de la sortie ZS du guide.

Par les propriétés intrinsèques du guide, aucune lumière ou du moins aucune quantité significative de lumière ne sort du guide par une autre surface extérieure du guide que la surface de sortie ZS. En effet, la lumière issue des première et deuxième sources qui vient à se propager jusqu'à une surface extérieure du guide différente de la surface de sortie est totalement réfléchie par cette surface et est ainsi confinée dans le guide. A cette fin, la lumière issue des première et deuxième sources comprend préférentiellement un faisceau de rayons de lumière sensiblement parallèles entre eux qui se propage vers le guide sensiblement perpendiculairement à l'entrée ZE du guide.

Chaque source de lumière peut ne pas être intrinsèquement apte à émettre, en direction de l'entrée ZE du guide, un faisceau de rayons de lumière suffisamment parallèles entre eux. Par exemple, la source de lumière peut être diffuse. Par un autre exemple, la source de lumière peut être agencée suffisamment loin de l'entrée du guide pour qu'une partie importante des rayons lumineux risque d'être perdue car elle n'impacterait pas la face d'entrée du guide, mais passerait à côté du guide. Auxquels cas, un collimateur 15 peut être agencé, de la façon illustrée sur la figure 1, entre ladite source et la zone d'entrée ZE1, ZE2 correspondante, pour obtenir, à partir de cette source de lumière, un faisceau de rayons de lumière sensiblement parallèles en entrée de cette zone.

Les surfaces d'entrée ZE et de sortie ZS peuvent être sensiblement opposées l'une à l'autre tel que représenté sur la figure 1. Toutefois, cette disposition des surfaces d'entrée ZE et de sortie ZS entre elles n'est pas limitative ; par exemple, elles peuvent également n'être opposées l'une à l'autre que par rapport à une direction principale de propagation de la lumière dans le guide, cette direction de propagation principale pouvant s'écarter d'une simple ligne droite. Par exemple, dans le cas d'un guide présentant une courbure, cette dernière peut amener les rayons à changer progressivement de direction générale de propagation.

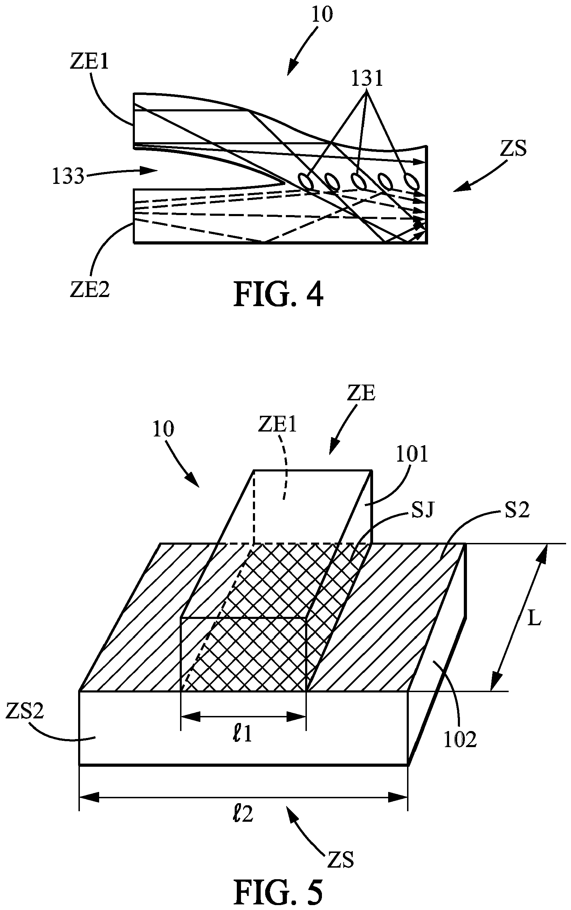

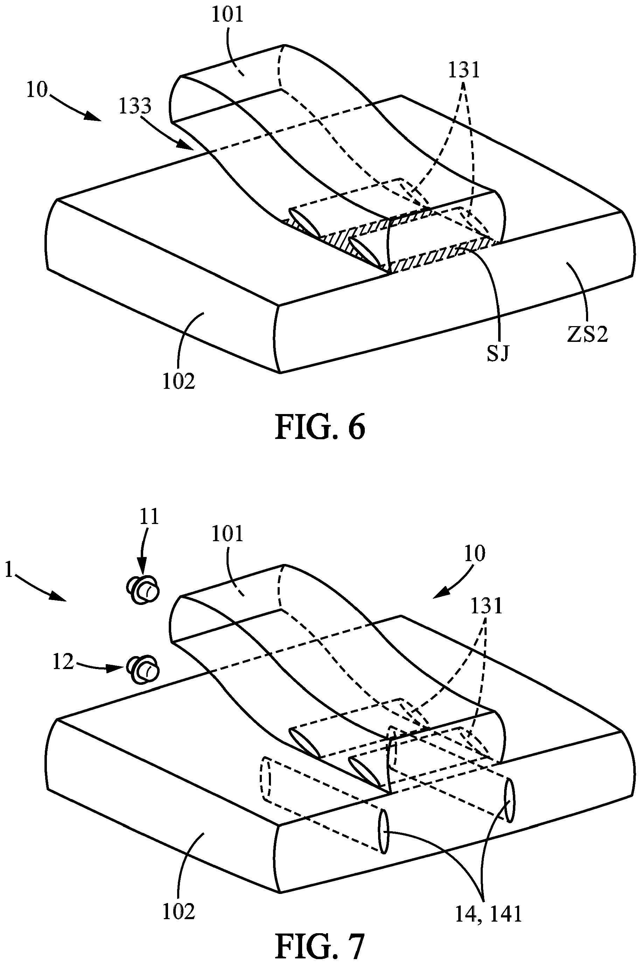

Les première et deuxième zones d'entrée ZE1 et ZE2 ne se recouvrent pas l'une l'autre. Elles peuvent être jointes l'une à l'autre, par exemple par une partie de leur pourtour comme représenté sur la figure 1, ou être disjointes l'une de l'autre, comme représenté sur la figure 4. En outre, elles peuvent s'étendre sensiblement dans une même mesure sur la surface d'entrée ZE, tel que représenté sur la figure 1, ou au contraire s'étendre dans des mesures largement différentes sur cette même surface, comme représenté par exemple sur les figures 6 à 9. Dans les exemples illustrés par les dessins, les première et deuxième zones d'entrée ZE1 et ZE2 couvrent à elles deux toute la surface d'entrée ZE du guide, mais cette illustration n'est pas limitative ; par exemple, une partie de la surface d'entrée ZE du guide pourrait ne pas être agencée face à une source de lumière.

Le premier dispositif de contrôle 13 de la propagation de la lumière dans le guide 10 est agencé de sorte que la deuxième zone de sortie ZS2 recouvre partiellement la première zone de sortie ZS1. Le recouvrement partiel des première et deuxième zones de sortie ZS1 et ZS2 entre elles signifie que ces zones ne sont ni disjointes, ni ne sont totalement confondues. Plus particulièrement, la deuxième zone de sortie ZS2 ne recouvre que partiellement la première zone de sortie ZS1.

Dans l'exemple illustré sur la figure 2, la première zone de sortie ZS1 (zone hachurée de haut en bas et de gauche à droite) occupe toute la surface de sortie ZS du guide, tandis que la deuxième zone de sortie ZS2 (zone hachurée de haut en bas et de droite à gauche) n'en occupe qu'une partie. Dans cet exemple également, la première zone de sortie ZS1 recouvre entièrement la deuxième zone de sortie ZS2. Toujours dans cet exemple, les première et deuxième zones de sortie ZS1, ZS2 ont en commun une partie de leur pourtour. Cette dernière caractéristique peut présenter un certain intérêt en termes d'effet de lumière, comme cela est détaillé plus bas.

Le recouvrement partiel des première et deuxième zones de sortie ZS1 et ZS2 peut être obtenu du fait que le premier dispositif de contrôle 13 comprend des moyens de confinement 131, 132. Ces moyens de confinement permettent plus particulièrement de confiner, dans une partie du guide, la propagation de la lumière issue de la deuxième source 12 et de laisser libre la propagation, dans le guide, de la lumière issue de la première source 11. Dès lors, lorsque seule la deuxième source de lumière 12 émet de la lumière dans le guide, la lumière est émise en sortie du guide par une partie seulement de la surface de sortie ZS du guide, nommément la deuxième zone de sortie ZS2.

La figure 1 représente une vue en perspective et en transparence d'un module lumineux selon l'invention comprenant un guide de lumière selon un premier mode de réalisation.

Selon ce premier mode de réalisation, les moyens de confinement comprennent une cavité 131 pratiquée dans le guide 10. Cette cavité 131 est disposée de sorte à réfléchir totalement la lumière issue de la deuxième source 12 et se propageant jusqu'à l'atteindre.

Plus particulièrement, la cavité 131 peut occuper une partie significative de la partie du guide située entre la première zone d'entrée ZE1 et la partie de la surface de sortie ZS non recouverte de la deuxième zone de sortie ZS2. Elle peut en outre présenter sensiblement la forme de cette partie du guide. Sa surface SB (surface basse du parallélépipède formant la cavité 131 sur la figure 1) destinée à réfléchir totalement la lumière issue de la deuxième source est située sensiblement au niveau, et préférentiellement légèrement au-dessus, d'un plan médian PM séparant les première et deuxième zones d'entrée ZE1 et ZE2.

Ainsi, la lumière issue de la deuxième source de lumière atteint la cavité 131 par cette surface SB et selon un angle d'incidence supérieur à un angle critique donné par la loi de Snell-Descartes, cette loi impliquant les indices de réfraction des milieux impliqués. Ici, le matériau constitutif du guide est d'un indice de réfraction proche de 1,4-1,6. Plus précisément, le PMMA a un indice de réfraction égal à 1,49 et le polycarbonate a un indice de réfraction égal à 1.59. Et l'air compris dans la cavité est d'un indice de réfraction proche de 1. Dès lors, l'angle critique est d'environ 40° et est plus particulièrement égal à 39° pour le polycarbonate et égal à 42° pour le PMMA. Il apparaît que la lumière issue de la deuxième source 12 est totalement réfléchie lorsqu'elle atteint la cavité 131 et est par conséquent confinée dans la partie du guide située sous la cavité 131, pour n'être émise que par une partie ZS2 de la surface de sortie ZS du guide.

Quant à la lumière issue de la première source 11, elle atteint la cavité 131 par une face sensiblement perpendiculaire à sa direction de propagation et est donc transmise dans la cavité. Chaque rayon ainsi transmis est dévié d'un angle déterminé là encore par la loi de Snell-Descartes. Certains rayons atteignent directement la face opposée de la cavité et sont à nouveau transmis jusqu'à atteindre la sortie ZS du guide. D'autres rayons sont réfléchis et transmis par les surfaces internes du guide, et notamment par la surface SB de la cavité 131 La lumière issue de la première source 11 peut donc se propager au moins par transmission dans la partie du guide située sous la surface SB de la cavité. Ainsi, la lumière issue de la première source 11 peut sortir du guide par toute la surface de sortie ZS du guide.

De nouveaux effets de lumière sont ainsi obtenus, qui consistent à :
- limiter l'émission de lumière en sortie du guide à une partie ZS2 de la sortie ZS du guide, lorsque seule la deuxième source émet de la lumière dans le guide,
- émettre un mélange de lumière issue des première et deuxième sources par la seule partie ZS2 de la sortie ZS du guide, lorsque les première et deuxième sources émettent de la lumière dans le guide, et
- émettre la seule lumière issue de la première source par une partie ZS1 de la sortie ZS du guide, lorsque les première et deuxième sources émettent de la lumière dans le guide.

Les mêmes effets de lumière sont obtenus par le module lumineux selon les différents autres modes de réalisation décrits ci-dessous.

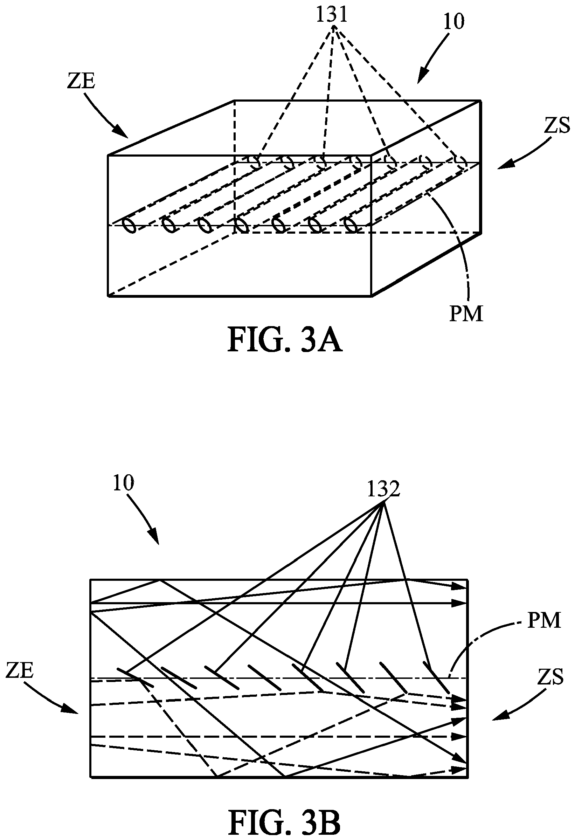

La figure 3A représente une vue en perspective et en transparence d'un guide de lumière selon un deuxième mode de réalisation.

Selon ce deuxième mode de réalisation, les moyens de confinement comprennent une pluralité de cavités 131 disposées en persienne sensiblement au niveau du plan médian PM séparant les première et deuxième zones d'entrée ZE1, ZE2.

Selon une variante de ce deuxième mode de réalisation, illustrée sur la figure 3B, les moyens de confinement comprennent une pluralité d'inserts 132 disposés en persienne sensiblement sur le plan médian PM. Chaque insert inclus dans le guide 10 peut plus particulièrement être opaque ou réfléchissant. Il est ainsi apte à absorber et/ou réfléchir totalement la lumière issue de la deuxième source 12 et se propageant jusqu'à l'atteindre.

En plasturgie, un insert désigne une pièce d'un matériau infusible incluse dans la pièce fabriquée, ici le guide. Par exemple, chaque insert peut comprendre un métal ou du graphite. Il est à noter en outre que la capacité d'absorption de l'insert peut dépendre de la longueur d'onde de la lumière atteignant l'insert et de la couleur de l'insert.

Que les cavités ou inserts soient disposé(e)s en persienne sous-tend que chacune des cavités ou chacun des inserts est de forme et de dimension propres à permettre cette disposition particulière.

Une autre variante (non représentée) est envisagée qui consiste à disposer en persienne une pluralité de cavités et d'inserts dans le guide, par exemple en alternance.

Plus particulièrement, les cavités (ou les inserts) s'étendent sensiblement d'une face latérale à une face latérale opposée du guide 10. Leur disposition en persienne permet de laisser passer la lumière issue de la première source et de s'opposer au passage de la lumière issue de la deuxième source. En effet, comme illustré sur la figure 3B et sur la figure 4, des rayons de lumière issus de la première source de lumière (traits pleins) peuvent passer dans les interstices entre les cavités. Au contraire, des rayons issus de la deuxième source de lumière (traits en tirets longs) ne 'voient' pas d'interstices entre les cavités et atteignent nécessairement une de celles-ci pour être totalement réfléchis (et/ou totalement absorbés) ; ces rayons sont ainsi confinés dans la partie du guide située sous les cavités.

Comme illustré sur la figure 3B, l'angle des inserts (ou des cavités) par rapport au plan médian PM peut varier en fonction de l'éloignement à l'entrée ZE du guide. Plus particulièrement, l'angle des inserts (ou des cavités) par rapport au plan médian PM peut augmenter à mesure que l'insert est plus distant de l'entrée ZE du guide. En effet, notamment dans le cas où une réflexion totale de la lumière issue de la deuxième source est recherchée (par opposition à une absorption), une condition, dite d'incidence, à remplir est que les rayons issus de cette source atteignent les inserts avec un angle d'incidence supérieur à l'angle critique déjà mentionné plus haut ; or, plus un insert est distant de l'entrée du guide, plus les rayons susceptibles de l'atteindre directement ont un angle de propagation faible par rapport au plan médian PM. Par conséquent, pour remplir la condition d'incidence, l'angle que forme, avec le plan médian, un insert distant de l'entrée du guide peut être plus élevé que l'angle que doit former, avec le plan médian, un insert plus proche de l'entrée.

Il est à noter en outre qu'il peut aussi être avantageux de diminuer l'angle des inserts (ou des cavités) par rapport au plan médian PM à mesure que l'insert est plus distant de l'entrée ZE du guide. Cela permet à une quantité plus importante de rayons issus de la première source 11 de se propager directement (sans impacter les cavités ou les inserts) vers la zone de sortie Z2. L'homme du métier appréciera au cas par cas le compromis à adopter.

La figure 4 représente une vue en coupe et en transparence d'un guide 10 de lumière selon un troisième mode de réalisation.

Relativement au guide de lumière selon le deuxième mode de réalisation décrit ci-dessus, le guide de lumière selon le troisième mode de réalisation comprend en outre une entaille 133 pratiquée dans le guide 10. L'entaille 133 peut plus particulièrement être considérée comme comprise dans le premier dispositif de contrôle 13. Il est à noter toutefois que le confinement de la lumière issue de chaque source au niveau de l'entaille 133 est lié aux seules propriétés intrinsèques du guide qui est disjoint à ce niveau.

Les première et deuxième entrées ZE1, ZE2 sont ainsi séparées entre elles, ce qui peut permettre de faciliter l'agencement des sources de lumière en face de ces zones.

La figure 5 représente une vue en perspective et en transparence d'un guide, ou d'une partie au moins d'un guide, selon un quatrième mode de réalisation ; toutefois aucun dispositif de contrôle de la propagation de la lumière n'y est représenté. Cette figure est destinée principalement à illustrer la forme particulière du guide selon le quatrième mode de réalisation, notamment relativement à la forme du guide selon les premier et deuxième modes de réalisation décrits précédemment. Par ailleurs, un guide comprenant une partie ayant la forme illustrée sur la figure 5 est illustré sur les figures 6 et 7 sur lesquelles sont également représentés les moyens de confinement 131 du premier dispositif de contrôle.

Ainsi, comme illustré sur la figure 5, le guide 10 selon le quatrième mode de réalisation comprend:
- une première branche 101 définie entre la première zone d'entrée ZE1 et la partie de la première zone de sortie ZS1 non recouverte par la deuxième zone de sortie ZS2, et
- une deuxième branche 102 définie entre la deuxième zone d'entrée ZE2 et la deuxième zone de sortie ZS2.

Les deux branches sont jointes entre elles par une surface de jonction SJ et le premier dispositif de contrôle 13 de la propagation de la lumière dans le guide 10 est agencé au niveau de la surface de jonction SJ des deux branches 101, 102.

Cette surface de jonction SJ est moins étendue que la surface S2 de la deuxième branche 102 comprenant la surface de jonction SJ. Plus particulièrement, en définissant une longueur L du guide entre son entrée et sa sortie et en définissant une largeur l du guide entre ses faces latérales opposées, les première et deuxième branche 101, 102 peuvent avoir une même longueur L, mais la largeur l1 de la branche 101 est inférieure à la largeur l2 de la branche 102.

Comme illustré sur la figure 6, un guide de lumière selon un cinquième mode de réalisation peut comprendre en outre, relativement au guide selon le quatrième mode de réalisation, l'entaille 133 tel que discuté plus haut en référence à la figure 4. Cette dernière peut d'ailleurs être considérée comme une vue en coupe et en transparence d'un guide de lumière selon le cinquième mode de réalisation illustré sur la figure 6. On note en particulier que les moyens de confinement 131 du premier dispositif de contrôle sont représentés sur cette figure 6 comme étant agencés au niveau de, et préférentiellement légèrement au-dessus de, la surface de jonction SJ.

Il est à noter que la lumière issue de la première source étant libre de se propager jusque dans la deuxième branche 102, cette lumière peut selon le cinquième mode de réalisation sortir du guide d'onde par toute la deuxième zone de sortie ZS2. Ceci peut être un effet de lumière additionnel recherché ou, au contraire, un effet de lumière indésirable. Si l'effet est indésirable, il peut y être apporté une solution selon la variante du cinquième mode de réalisation du guide telle que décrite ci-dessous en référence à la figure 7.

Comme illustré sur la figure 7, le guide 10 sous cette forme générale illustrée sur la figure 5 peut plus particulièrement comprendre un deuxième dispositif de contrôle 14 de la propagation de la lumière.

Ce deuxième dispositif de contrôle peut comprendre des moyens de confinement 141 propres, agencés dans la deuxième branche 102 pour confiner la propagation de la lumière issue de la première source 11. Les moyens de confinement 141 peuvent plus particulièrement être agencés sensiblement sous un bord long de longueur L (illustré sur la figure 5) de la surface de jonction SJ (identique à celle illustrée sur la figure 6).

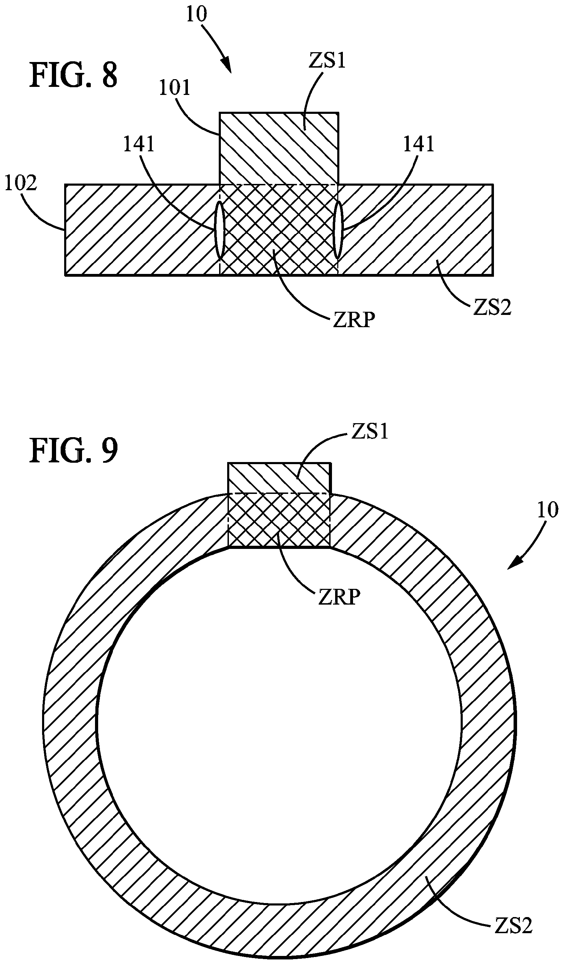

Comme illustré sur la figure 8 qui représente une vue de face de la sortie du guide illustré sur la figure 7, et selon le même principe que le confinement décrit plus haut réalisé par le premier dispositif de contrôle 13, les première et deuxième zones de sortie ZS1, ZS2 se recouvrent ainsi sur une zone délimitée ZRP de la deuxième zone de sortie ZS2. Les première et deuxième zones de sortie ZS1, ZS2 ont alors en commun la seule partie de leur pourtour consistant en un bord (bas sur la figure) de la zone de recouvrement partiel ZRP. L'intérêt en termes d'effet de lumière est d'éviter que la lumière issue de la première source vienne à se propager dans les parties latérales de la branche 102 et sortir sur une zone plus étendue que la zone de recouvrement partielle ZRP. Dans le cas où les première et deuxième sources sont de couleurs différentes, l'intérêt en termes d'effet de lumière est plus particulièrement d'éviter que la lumière issue de la première source créée un dégradé de couleurs au niveau la deuxième zone de sortie ZS2.

Il est à noter que l'aspect centré dans la largeur des branches 101, 102 représentées sur les figures 5 à 8 est un choix purement illustratif, et nullement limitatif.

La figure 9 représente une vue de face d'un guide de lumière selon un sixième mode de réalisation.

Selon ce mode de réalisation, la surface S2 (illustrée sur la figure 5) de la deuxième branche 102 est repliée sur elle-même de sorte que la deuxième branche ZS2 forme sensiblement un anneau.

Il est à noter par ailleurs que chaque cavité 131 ou chaque insert 132 considéré(e) ci-dessus peut être soit entièrement inclus(e) dans le guide, soit débouchant(e) sur au moins un côté du guide.

## Revendications

1. Module lumineux, notamment d'éclairage et/ou de signalisation, pour véhicule automobile comprenant :
- un guide (10) de lumière comprenant au moins des première et deuxième zones d'entrée (ZE1, ZE2) et au moins des première et deuxième zones de sortie (ZS1, ZS2) de lumière,
- une première source (11) de lumière agencée en regard de la première zone (ZE1) de l'entrée (ZE),
- une deuxième source (12) de lumière agencée en regard de la deuxième zone (ZE2) de l'entrée (ZE),
le guide étant agencé de sorte à ce que la lumière issue des première et deuxième sources (11, 12) soit apte à se propager dans le guide (10) jusqu'à des première et deuxième zones (ZS1, ZS2) de la sortie (ZS), respectivement, le module lumineux (1) comprenant en outre un premier dispositif de contrôle (13) de la propagation de la lumière dans le guide (10), le premier dispositif de contrôle (13) étant agencé de sorte que la deuxième zone de sortie (ZS2) recouvre partiellement la première zone de sortie (ZS1) **caractérisé en ce que** le premier dispositif de contrôle (13) comprend des moyens de confinement (131, 132) pour confiner la propagation de la lumière issue de la deuxième source (12) et pour laisser libre la propagation de la lumière issue de la première source (11)..

2. Module lumineux (1) selon la revendication 1, dans lequel les première et deuxième zones de sortie (ZS1, ZS2) ont en commun une partie de leur pourtour.

3. Module lumineux (1) selon l'une des revendications 1 et 2, dans lequel les moyens de confinement (131, 132) comprennent au moins une cavité (131) pratiquée dans le guide (10) et disposée de sorte à réfléchir totalement la lumière issue de la deuxième source (12) et se propageant jusqu'à atteindre la cavité (131).

4. Module lumineux (1) selon l'une quelconque des revendications 1 à 3, dans lequel les moyens de confinement (131, 132) comprennent au moins un insert (132) opaque ou réfléchissant, inclus dans le guide (10), et apte à absorber et/ou réfléchir totalement la lumière issue de la deuxième source (12) et se propageant jusqu'à atteindre l'insert (132), respectivement.

5. Module lumineux (1) selon l'une quelconque des revendications 1 et 4, dans lequel les moyens de confinement (131, 132) comprennent une pluralité de cavités (131) et/ou d'inserts (132) disposé(e)s en persienne sensiblement sur un plan médian (PM) séparant les première et deuxième zones d'entrée (ZE1, ZE2).

6. Module lumineux (1) selon l'une quelconque des revendications précédentes, dans lequel le premier dispositif de contrôle (13) comprend une entaille (133) pratiquée dans le guide (10) et séparant les première et deuxième zones d'entrée (ZE1, ZE2).

7. Module lumineux (1) selon l'une quelconque des revendications précédentes, dans lequel le guide (10) comprend:
- une première branche (101) définie entre la première zone d'entrée (ZE1) et la partie de la première zone de sortie (ZS1) non recouverte par la deuxième zone de sortie (ZS2), et
- une deuxième branche (102) définie entre la deuxième zone d'entrée (ZE2) et la deuxième zone de sortie (ZS2),
les deux branches étant jointes entre elles par une surface de jonction (SJ) moins étendue que la surface (S2) de la deuxième branche (102) comprenant la surface de jonction (SJ).

8. Module lumineux (1) selon la revendication 7, comprenant un deuxième dispositif de contrôle (14) de la propagation de la lumière dans le guide (10), le deuxième dispositif de contrôle (14) comprenant des moyens de confinement (141) agencés dans la deuxième branche (102) sensiblement sous un bord long (L) de la surface de jonction (SJ) pour confiner la propagation de la lumière issue de la première source (11) de sorte que les première et deuxième zones de sortie (ZS1, ZS2) se recouvrent sur une zone délimitée (ZRP) de la deuxième zone de sortie (ZS2).

9. Module lumineux (1) selon l'une des revendications 7 et 8, dans lequel la surface (S2) de la deuxième branche (102) est repliée sur elle-même de sorte que la deuxième branche (ZS2) forme sensiblement un anneau.

10. Module lumineux (1) selon l'une quelconque des revendications précédentes, dans lequel les première et deuxième sources (11, 12) ont des fonctions d'éclairage et/ou de signalisation différentes entre elles.

## Patentansprüche

1. Lichtmodul, insbesondere zur Beleuchtung und/oder Signalisierung für ein Kraftfahrzeug, umfassend:
- einen Lichtleiter (10), der mindestens einen ersten und einen zweiten Eintrittsbereich (ZE1, ZE2) und mindestens einen ersten und einen zweiten Austrittsbereich (ZS1, ZS2) von Licht aufweist,
- eine erste Lichtquelle (11), die gegenüber von dem ersten Bereich (ZE1) des Eintritts (ZE) angeordnet ist,
- eine zweite Lichtquelle (12), die gegenüber von dem zweiten Bereich (ZE2) des Eintritts (ZE) angeordnet ist,
wobei der Leiter derart angeordnet ist, dass das Licht, das aus der ersten und der zweiten Quelle (11, 12) ausgetreten ist, geeignet ist, sich in dem Leiter (10) jeweils bis zu dem ersten und dem zweiten Bereich (ZS1, ZS2) des Austritts (ZS) auszubreiten,
wobei das Lichtmodul (1) ferner eine erste Kontrollvorrichtung (13) der Ausbreitung des Lichts in dem Leiter (10) aufweist, wobei die erste Kontrollvorrichtung (13) derart angeordnet ist, dass der zweite Austrittsbereich (ZS2) teilweise den ersten Austrittsbereich (ZS1) bedeckt, **dadurch gekennzeichnet, dass** die erste Kontrollvorrichtung (13) Begrenzungsmittel (131, 132) aufweist, um die Ausbreitung des Lichtes, das aus der zweiten Quelle (12) ausgetreten ist, zu begrenzen und um die Ausbreitung des Lichtes, das aus der ersten Quelle (11) ausgetreten ist, frei zu lassen.

2. Lichtmodul (1) nach Anspruch 1, wobei der erste und der zweite Austrittsbereich (ZS1, ZS2) einen Teil ihres Umfangs gemeinsam haben.

3. Lichtmodul (1) nach einem der Ansprüche 1 und 2, wobei die Begrenzungsmittel (131, 132) mindestens einen Hohlraum (131) aufweisen, der in dem Leiter (10) ausgebildet ist und derart angeordnet ist, um das Licht, das aus der zweiten Quelle (12) ausgetreten ist, vollständig zu reflektieren und sich dabei ausbreitet, bis es den Hohlraum (131) erreicht.

4. Lichtmodul (1) nach einem der Ansprüche 1 bis 3, wobei die Begrenzungsmittel (131, 132) mindestens einen opaken oder reflektierenden Einsatz (132) aufweisen, der in dem Leiter (10) enthalten ist und geeignet ist, das Licht, das aus der zweiten Quelle (12) ausgetreten ist, vollständig zu absorbieren und/oder zu reflektieren und sich dabei ausbreitet, bis es jeweils den Einsatz (132) erreicht.

5. Lichtmodul (1) nach einem der Ansprüche 1 und 4, wobei die Begrenzungsmittel (131, 132) mehrere Hohlräume (131) und/oder Einsätze (132) aufweisen, die lamellenförmig im Wesentlichen in einer Mittenebene (PM), die den ersten und den zweiten Eintrittsbereich (ZE1, ZE2) trennt, angeordnet sind.

6. Lichtmodul (1) nach einem der vorhergehenden Ansprüche, wobei die erste Kontrollvorrichtung (13) eine Einkerbung (133) aufweist, die in dem Leiter (10) ausgeführt ist und die den ersten und den zweiten Eintrittsbereich (ZE1, ZE2) trennt.

7. Lichtmodul (1) nach einem der vorhergehenden Ansprüche, wobei der Leiter (10) aufweist:
- einen ersten Zweig (101), der zwischen dem ersten Eintrittsbereich (ZE1) und dem Teil des ersten Austrittsbereichs (ZS1) definiert ist, der nicht von dem zweiten Austrittsbereichs (ZS2) bedeckt ist, und
- einen zweiten Zweig (102), der zwischen dem zweiten Eintrittsbereich (ZE2) und dem zweiten Austrittsbereich (ZS2) definiert ist,
wobei die zwei Zweige durch eine Verbindungsfläche (SJ) miteinander verbunden sind, die weniger ausgedehnt ist als die Fläche (S2) des zweiten Zweiges (102), der die Verbindungsfläche (SJ) aufweist.

8. Lichtmodul (1) nach Anspruch 7, umfassend eine zweite Kontrollvorrichtung (14) der Ausbreitung des Lichts in dem Leiter (10), wobei die zweite Kontrollvorrichtung (14) Begrenzungsmittel (141) aufweist, die in dem zweiten Zweig (102) im Wesentlichen unter einer langen Kante (L) der Verbindungsfläche (SJ) angeordnet sind, um die Ausbreitung des Lichtes, das aus der ersten Quelle (11) ausgetreten ist, derart zu begrenzen, dass sich der erste und der zweite Austrittsbereich (ZS1, ZS2) auf einem begrenzten Bereich (ZRP) des zweiten Austrittsbereichs (ZS2) überlappen.

9. Lichtmodul (1) nach einem der Ansprüche 7 und 8, wobei die Fläche (S2) des zweiten Zweiges (102) derart auf sich selbst gefaltet ist, dass der zweite Zweig (ZS2) im Wesentlichen einen Ring bildet.

10. Lichtmodul (1) nach einem der vorhergehenden Ansprüche, wobei die erste und die zweite Lichtquelle (11, 12) Beleuchtungs- und/oder Signalisierungsfunktionen aufweisen, die voneinander verschieden sind.

## Claims

1. Luminous motor-vehicle module, in particular for lighting and/or signalling, comprising:
- a light guide (10) comprising at least a first and second light entrance zone (ZE1, ZE2) and at least a first and second light exit zone (ZS1, ZS2),
- a first light source (11) arranged facing the first zone (ZE1) of the entrance (ZE),
- a second light source (12) arranged facing the second zone (ZE2) of the entrance (ZE),
the guide being arranged so that the light output from the first and second sources (11, 12) is able to propagate through the guide (10) to the first and second zones (ZS1, ZS2) of the exit (ZS), respectively,
the luminous module (1) furthermore comprising a first device (13) for controlling the propagation of the light through the guide (10), the first controlling device (13) being arranged so that the second exit zone (ZS2) partially covers the first exit zone (ZS1),
**characterized in that**
the first controlling device (13) comprises confining means (131, 132) in order to confine the propagation of the light output from the second source (12) and to leave free the propagation of the light output from the first source (11).

2. Luminous module (1) according to Claim 1, wherein the first and second exit zones (ZS1, ZS2) have in common one portion of their perimeter.

3. Luminous module (1) according to one of Claims 1 and 2, wherein the confining means (131, 132) comprise at least one cavity (131) produced in the guide (10) and placed so as to totally reflect the light output from the second source (12) and that propagates to reach the cavity (131).

4. Luminous module (1) according to any one of Claims 1 to 3, wherein the confining means (131, 132) comprise at least one opaque or reflective insert (132) included in the guide (10) and able to totally reflect and/or absorb the light output from the second source (12) and that propagates to reach the insert (132), respectively.

5. Luminous module (1) according to either one of Claims 1 and 4, wherein the confining means (131, 132) comprise a plurality of cavities (131) and/or of inserts (132) arranged louvered substantially on a median plane (PM) separating the first and second entrance zones (ZE1, ZE2) .

6. Luminous module (1) according to any one of the preceding claims, wherein the first controlling device (13) comprises a notch (133) produced in the guide (10) and separating the first and second entrance zones (ZE1, ZE2).

7. Luminous module (1) according to any one of the preceding claims, wherein the guide (10) comprises:
- a first branch (101) defined between the first entrance zone (ZE1) and the portion of the first exit zone (ZS1) not covered by the second exit zone (ZS2), and
- a second branch (102) defined between the second entrance zone (ZE2) and the second exit zone (ZS2),
the two branches being joined to each other via a surface junction (SJ) that is less extensive than the surface (S2) of the second branch (102) comprising the surface junction (SJ).

8. Luminous module (1) according to Claim 7, comprising a second device (14) for controlling the propagation of the light through the guide (10), the second controlling device (14) comprising confining means (141) arranged in the second branch (102) substantially under a long edge (L) of the surface junction (SJ) in order to confine the propagation of the light output from the first source (11) so that the first and second exit zones (ZS1, ZS2) overlap in a delineated zone (ZRP) of the second exit zone (ZS2).

9. Luminous module (1) according to one of Claims 7 and 8, wherein the surface (S2) of the second branch (102) is folded on itself so that the second branch (ZS2) substantially forms a ring.

10. Luminous module (1) according to any one of the preceding claims, wherein the first and second sources (11, 12) have lighting and/or signalling functions that are different from each other.
